# EUROPÄISCHE PATENTSCHRIFT

(11) **EP 3 516 022 B1**
(45) Veröffentlichungstag und Bekanntmachung des Hinweises auf die Patenterteilung: **03.11.2021**
(21) Anmeldenummer: 17771664.4
(22) Anmeldetag: 20.09.2017
(51) Int. Cl.: C10M 145/34

(54) **VERWENDUNG VON SCHMIERSTOFFEN AUF DER BASIS VON WASSERLÖSLICHEN, HOCHVISKOSEN POLYGLYKOLEN**
USE OF LUBRICANTS BASED ON WATERSOLUBLE POLYALKYLENE GLYCOLS
UTILISATION DES LUBRIFIANTS À BASE DE POLYALKYLÈNE GLYCOLS

(30) Priorität: 21.09.2016 DE 102016011397; 01.09.2017 DE 102017008234; 15.09.2017 DE 102017008676
(43) Veröffentlichungstag der Anmeldung: 31.07.2019
(73) Patentinhaber: Klüber Lubrication München SE & Co. KG, 81379 München (DE)
(72) Erfinder: NARNHAMMER, Daniel, Andreas, 03103 Manchester, NH (US); SEEMEYER, Stefan, 82515 Wolfratshausen (DE); KOOZER, Justin, 80108 Castle Rock, CO (US); HOLM, Ari-Pekka, 82110 Germering (DE)
(74) Vertreter: Hering, Hartmut
(86) Internationale Anmeldenummer: PCT/EP2017/001124
(87) Internationale Veröffentlichungsnummer: WO 2018/054534

(56) Entgegenhaltungen:
- US-A- 5 151 205
- US-A1- 2005 250 654
- WILLIAM HANKES R: "The selection and application of lubricants for rotary kiln girth gears and pinions", CEMENT INDUSTRY TECHNICAL CONFERENCE (CIC), 2013 IEEE-IAS/PCA, IEEE, 11. April 2013 (2013-04-11), Seiten 1-9, XP032418736, DOI: 10.1109/CITCON.2013.6525264 ISBN: 978-1-4673-5552-0

## Beschreibung

Die vorliegende Erfindung betrifft die Verwendung von Schmierstoffen auf der Basis von wasserlöslichen, hochviskosen Polyglykolen zur Schmierung von offenen Getrieben, die beispielsweise in Drehrohröfen, in Mühlenantrieben, wie SAG (Semi-Autogenous-Grinding) oder Kugelmühlen, verwendet werden.

Die Entwicklung von neuen Schmierstoffen muss mit der allgemeinen Weiterentwicklung der Technik einhergehen, die neue und höhere Anforderungen an die Schmierstoffe stellt. Diese Anforderungen liegen insbesondere im Bereich der Verbesserung des Verschleißschutzes, dem geringeren Schmierstoffverbrauch und damit auch dem niedrigeren Energieverbrauch.

Im Bereich der Verwendung in offenen Zahnradgetrieben für Mühlen und Drehrohröfen, die beispielsweise im Bergbau bei der Aufbereitung von Eisenerzen, Kupfer, Nickel, Zink, Bauxit und dergleichen verwendet werden, bei der Herstellung von Düngemitteln, der Abfallbearbeitung, bei der Papierherstellung, bei der Zementherstellung, muss der Schmierstoff dafür sorgen, dass die Zahnräder mit einem trennenden, lastübertragenden Schmierfilm überzogen sind. Damit wird erreicht, dass sich die metallischen Oberflächen nicht berühren und somit auch kein Verschleiß auftritt. Der Schmierstoff muss also hohen Anforderungen im Hinblick auf hohe und niedrige Drehzahlen, geringe Reibung, extrem lange Laufzeiten, hohe Lasten, starke Vibrationen und lange Nachschmierintervalle genügen.

Bei großen offenen Getrieben existieren Bereiche vor und nach der Kontaktlinie (Teillinie) in der Grenz- und Mischreibungszustände herrschen. In diesen Bereichen entsteht vermehrt großflächige Reibung, die zu hohem Verschleiß und Energieverlust führt und somit die Lebensdauer des Antriebs reduziert.

Die WO 2015/063565 A1 beschreibt einen Schmierstoff und ein Verfahren zur Schmierung von mechanischen Vorrichtungen, insbesondere wird die Schmierung von Vorrichtungen beschrieben, die bei der Verarbeitung von Zuckerrohr verwendet werden. Diese Schmierstoffzusammensetzung ist im wesentlichen wasserunlöslich, da dies für die beschriebenen Anwendungen zwingend notwendig ist, dies bedeutet, dass die Zusammensetzung eine Wasserlöslichkeit von 0,5 Gew.-% oder weniger aufweist. Die Zusammensetzung umfasst ein Polyoxypropylenglykolpolymer mit einem Molekulargewicht von 5000 bis 20000 g/mol, einer kinetischen Viskosität von 1200 bis 20000 cSt bei 40°C, einem Viskositätsindex gleich oder größer 230 und einem Grad der Ungesättigtheit von 0,05 meq/g oder weniger, sowie Antioxidantien.

Die WO 2012/018463 A2 beschreibt die Verwendung von hochviskosen Poly-α-Olefinen, die als Bestandteil von Getriebeölen zur Schmierung von Drehrohröfen eingesetzt werden. Diese hochviskosen Poly-α-Olefine weisen eine hohe Stabilität gegenüber Scherkräften aus.

Die US 5151205 offenbart Schmierstoffe für offene Zahnradgetriebe auf der Basis von Esterölen, Polyalphaolefinen sowie mit einem Verdickungsmittel auf Basis von Polybuten und Additiven.

Der vorliegenden Erfindung lag die Aufgabe zu Grunde, einen Schmierstoff bereitzustellen, der den oben genannten Anforderungen entspricht und in offenen Zahnradgetrieben für Drehrohröfen und Mühlenantriebe, bei der Gewinnung von Mineralien und Erzen, bei der Herstellung von Düngemitteln, bei der Abfallbearbeitung, bei der Papierherstellung sowie der Zementherstellung verwendet werden kann.

Überraschenderweise wird die Aufgabe durch die Verwendung von hochviskosen, wasserlöslichen Polyglykolen in einem Schmierstoff gelöst. Die Erfindung ist in den angefügten Ansprüchen definiert. Die Bezeichnung Polyglykol (= Polyalkylenoxid) wird als Oberbegriff für Homopolymere des Ethylenoxids und des Propylenoxids sowie für Copolymere aus Ethylenoxid und Propylenoxid verwendet. Die physikalischen Eigenschaften der Polyalkylenoxide leiten sich von ihrer Herstellungsart ab. Sie bestehen überwiegend aus verzweigten Polyethern, die beispielsweise durch Polykondensation aus Glykolen hergestellt werden. Sie können auch durch ringöffnende Polymerisation von Ethylenoxid oder Propylenoxid snythetisiert werden. Ethylenoxidpolymere werden entweder mit Diol oder Alkohol gestartet, die Propylenoxidpolymere werden mit einem Butylalkohol gestartet. Die Copolymere aus Ethylenoxid und Propylenoxid können in unterschiedlichen Zusammensetzungen hergestellt werden. Als Starter werden üblicherweise Alkohole wie Butanol, Glykol, Glycerin aber auch Wasser verwendet.

Schmierstoffe auf Polyglykolbasis liefern einen sehr geringen Reibungskoeffizienten, insbesondere im Bereich der halbflüssigen Mischreibung. Die hohe Viskosität, der hohe Viskositätsindex (VI) und EP/AW (extreme pressure/anti wear) Additive stellen eine genügende Filmdicke auf der Zahnradoberfläche und den Schutz derselben sicher.

Bei dem besseren Wärmeübertragungskoeffizienten des Polyglykols wird erwartet, dass dies zu einer niedrigeren Temperatur im Bereich der Zähne führt, was als direkter Nachweis bzw. Indikator für den geringeren Reibungsverlust und der höheren Effizienz des Getriebes gewertet werden kann.

Polyglykolöle liefern auch eine gute Scherstabilität, die wichtig ist, wenn stark beladene offene Zahnradgetriebe in Drehrohröfen und Mühlen verwendet werden. Dieser und die anderen Effekte können zu einer signifikant längeren Laufzeit des Öls führen, wenn die Schmierung über ein Tauchbad oder mittels einer Sprühvorrichtung (Verlängerung der Sprühintervalle, reduzierter Schmierstoffverbrauch) durchgeführt wird.

Eines der häufigsten Verfahren zum Auftragen von Schmierstoffen bei offenen Getrieben ist das sogenannte Sprühverfahren mittels Pumpe und mehrerer Düsen. Daher ist es unumgänglich, dass der Schmierstoff eine gute Sprühfähigkeit aufweist. Der Schmierstoff ist sprühfähig und kann sofort verwendet werden. Auf Grund des hohen Viskositätsindex zeigt er auch eine bessere Sprühfähigkeit bei niedrigen Temperaturen. Dies führt zu einem größeren Temperaturfenster bei der Anwendung gegenüber den bekannten Produkten. Darüber hinaus kann auf die Verwendung von Lösungsmitteln und Verdünnungsmittel verzichtet werden.

Für die vorliegende Erfindung werden wasserlösliche, hochviskose Polyalkylenpolymere eingesetzt, die ausgewählt werden aus der Gruppe bestehend aus Polyethylenoxid/Polypropylenoxid. Als wasserlöslich werden Polymere (laut Römpp Lexikon der Chemie Bd. 6, 10. Auflage, 1996) bezeichnet, deren gemeinsames Merkmal ihre Löslichkeit in Wasser oder wässrigen Medien ist. Voraussetzung dafür ist, dass diese Polymere eine für die Wasserlöslichkeit ausreichende Anzahl von hydrophilen Gruppen besitzen und nicht vernetzt sind. Die hydrophilen Gruppen können nichtionisch, anionisch, kationisch oder zwitterionisch sein, z.B. -OH, -COOH, -NH₂, -SH.

Wie bereits erwähnt können die Copolymere aus Ethylenoxid und Propylenoxid in unterschiedlichen Zusammensetzungen hergestellt werden. So gibt es diejenigen, die ein Verhältnis von 50:50 (1:1) von Ethylenoxid und Propylenoxid (Verbindung 1) aufweisen, sowie solche, die ein Verhältnis von 75:25 (3:1) von Ethylenoxid und Propylenoxid (Verbindung 2) aufweisen. Im Fall der Verbindung 1 wird das Herstellungsverfahren mit einer Butylverbindung gestartet und Ethylenoxid und Propylenoxid werden in gleichen Mengen eingesetzt. Die Verbindung 2 wird mit Wasser gestartet und ist daher ein Diol. Bei beiden Verbindungen handelt es sich um wasserlösliche Produkte. Je höher der Anteil des Ethylenoxids ist, desto mehr Wasser kann der Schmierstoff aufnehmen. Die Verbindungen haben unterschiedliche Molekulargewichte, Viskositäten, Viskositätsindices und Pourpoints. Die Copolymerverbindungen haben im Vergleich mit den Homopolymeren geringere Pourpoints bei höheren Molekulargewichten. Auch haben diese Copolymere höhere Viskositätsindices verglichen mit den Polypropylenoxidpolymeren. Polyglykole sind sehr hydrolysebeständige, bei höheren Temperaturen aber oxidationsempfindliche Produkte. Ihre chemische Reaktivität wird durch die terminalen OH-Gruppen bestimmt, die leicht verestert (zu Polyethylenoxidestern) oder verethert (zu Polyethylenoxidethern) oder mit Isocyanaten zu Polyurethan umgesetzt werden können. Die physikalischen Eigenschaften der wasserlöslichen Polyalkylenpolymere sind in "Synthetic Lubricants and High-Performance Functional Fluids" ed. by Ronald L. Shubkin, 1993, Marcel Dekker Inc. New York; Kapitel 4, S. 101 ff ausführlich beschrieben.

Für viele Anwendungen ist allerdings die Wasserlöslichkeit der Polyalkylenglykole kritisch. So können die Copolymerverbindungen bei Temperaturen von 100°C und mehr ausfallen. Dieser Wasserlöslichkeitsverlust mit ansteigender Temperatur wird als Cloudpoint bezeichnet.

Schmierstoffe auf Basis von hochviskosen Polyglykolen zeigen hervorragende Eigenschaften und liefern einen ausreichenden Schmierfilm, um die Zähne der Zahnräder vor Metall-Metall-Kontakten zu schützen, wobei das Vorkommen des Fressens und der Graufleckenbildung auf der Metalloberfläche reduziert werden kann.

Der Schmierstoff enthält ein Polylalkylencopolymer und Additive.

Vorzugsweise enthält der Schmierstoff
90 bis 99 Gew.-% Polyalkylencopolymer,
10 bis 1 Gew.-% Additive.

Als besonders vorteilhaft für die vorliegende Erfindung erwies sich ein Polyalkylencopolymer bestehend aus Polyethylenoxid/Polypropylenoxid im Verhältnis 1:1 **(Verbindung 1)**, insbesondere bevorzugt im Verhältnis 3:1 **(Verbindung 2**).

Die Viskositäten der **Verbindung 1** liegen im Bereich von 5 bis 1500 cSt bei 40°C. Die Molekulargewichte **der Verbindung 1** liegen im Bereich von 90 bis 4000. Die bevorzugten Verbindungen werden mit einem Diol bzw. Wasser gestartet.

Die Viskositäten der **Verbindung 2** liegen im Bereich von 90 bis 54.000 cSt bei 40°C. Bevorzugt sind die Verbindungen, die eine Viskosität von 450 bis 18.000 cSt bei 40°C aufweisen, insbesondere bevorzugt sind die, die eine Viskosität von 1.000 bis 18.000 cSt. bei 40°C aufweisen. Die Molekulargewichte der bevorzugten Verbindungen sind im Bereich von 980 bis 20.000, besonders bevorzugt sind Zusammensetzungen mit einem Molekulargewicht von 10.000. Die bevorzugten Verbindungen werden mit einem Diol bzw. Wasser gestartet.

Eine besonders bevorzugte Zusammensetzung (Zusammensetzung 1) enthält:
98,7 Gew.-% Polyethylenglykol/Polypropylenglykol 3:1 mit einer Viskosität von 17.850 cSt bei 40°C, einem Molekulargewicht von 15.000 und einem Pourpoint von 4,
1 Gew.-% phenolisches Antioxidationsmittel und
0,3 Gew.-% Bernsteinsäurehalbester (Carbonsäurederivat) als Korrosionsschutzmittel.

Die Additive können ausgewählt werden aus der Gruppe bestehend aus Antioxidationsmittel, Korrosionsschutzmittel, Verschleißschutzmittel, Pourpoint- und Viskositätsverbesserer, UV-Stabilisatoren und dergleichen. Eine besonders bevorzugte Gruppe von Additiven sind diejenigen, die in fester Form vorliegen,die in den Grundölen unlöslich sind. In diesem Falle werden Feststoffe bevorzugt, die keine prägnante Farbe besitzen. Hier eignen sich insbesondere weiße Stoffe, wie Bornitrid, sowie Verbindungen auf Basis von Phosphaten, von Carbonaten sowie Carboxylaten. Ganz besonders bevorzugt werden Alkali- und Erdalkalisalze von Mono- und Dicarbonsäuren verwendet.

Des weiteren kann die Schmierstoffzusammensetzung noch weitere Grundöle ausgewählt aus der Gruppe bestehend aus Estern, Mineralölen, synthetischen Kohlenwasserstoffen enthalten. Des weiteren können wasserunlösliche Polyglykole als weiteres Grundöl verwendet werden. Wasserunlösliche Polyglykole können Random-Polymere (statistische Copolymere) oder Block-Copolymere sein. Diese können Ethlenoxid, Propylenoxid, Butylenoxid und THF Einheiten enthalten. Starter können mono-, di- und mehrfunktionell Alkohole sein. Der Gehalt an Ethylenoxid ist dabei geringer als 50% (bezogen auf Molanteile) bzw. 1:1.

Eine bevorzugte Zusammensetzung enthält:
70 bis 98,5 Gew.-% Polyethylenglykol/Polypropylenglykol 3:1,
0,5 bis 20 Gew.-% wasserunlösliches Polyglykol und
10 bis 1 Gew.-% Additive.

Eine weitere bevorzugte Zusammensetzung enthält:
70 bis 98,5 Gew.-% Polyethylenglykol/Polypropylenglykol 1:1,
0,5 bis 20 Gew.-% wasserunlösliches Polyglykol und
10 bis 1 Gew.-% Additive.

Eine noch weitere bevorzugte Zusammensetzung enthält:
87 bis 90 Gew.-% Polyalkylencopolymer der Verbindung 1 und/oder 2,
10 bis 1 Gew.-% Additive und
3 bis 0,1 Gew.% Alkali- oder Erdalkalisalze von Mono- und/oder Dicarbonsäuren.

Außerdem enthält eine weitere bevorzugte Zusammensetzung
87 bis 90 Gew.-% Polyalkylencopolymer der Verbindung 1 und/oder 2,
10 bis 1 Gew.-% Additive und
3 bis 0,1 Gew.% Dinatriumsebaccat.

Mit der Zusammensetzung 1 wurde die Grenzbeanspruchung auf einem offenen Zahnradgetriebe untersucht, um so die Schadenskraftstufe und des spezifischen Verschleiß in mg/kWh zu ermitteln. Dazu wurde ein FZG-Zahnradverspannungsprüfstand verwendet, mit dem das Verschleißschutzverhalten von Fließfetten und Schmierölen, sowie die Beanspruchung untersucht werden und so Aussagen über die Schadenskraftstufe und den Verschleiß gemacht werden können.

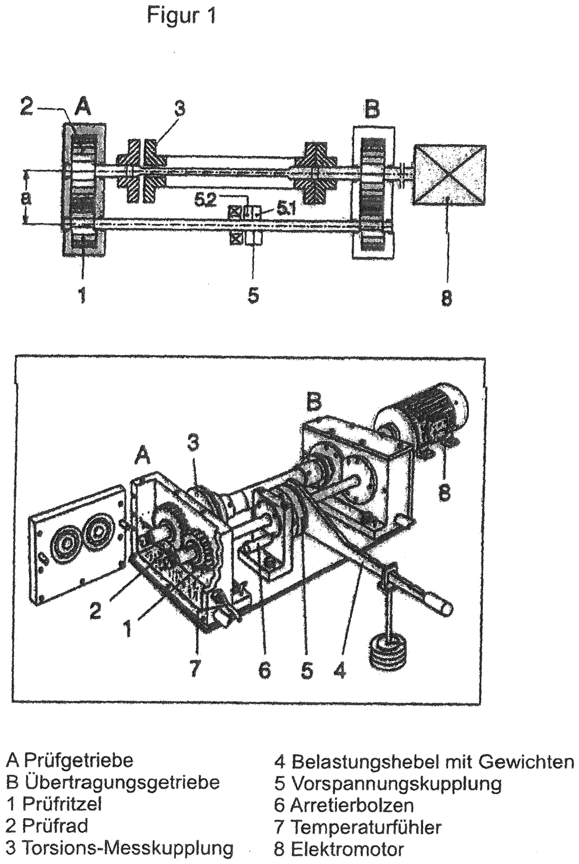

Figur 1 zeigt den FZG*-Verspannungsprüfstand (* Forschungsstelle für Zahnrad- und Getriebebau, Technische Universität München).

Der Versuch wurde unter den folgenden Testbedingungen durchgeführt:
Umfangsgeschwindigkeit: 2,8 m/s
Ritzeldrehzahl: 500 rpm
Laufzeit je Kraftstufe: 45 Minuten
Treibendes Prüfrad: Ritzel
Gesamtumdrehungen des Motors je Kraftstufe: 21700
Tauchschmierung: ölsumpftemperatur ab Kraftstufe (KS 4): 50°C, Prüfölmenge: ca. 1,25 l
Testergebnis: Schadenskraftstufe DIN ISO 14635-3-A/2,8/40 - M : > <12 Freßlastdrehmoment M_{Test} 534,5 Nm
Arbeitsbezogene Gewichtsänderung ΔMₛ 0,0186 mg/kWh

Tabelle 1 zeigt die Ergebnisse.

**Tabelle 1**

| Kraftstufe | Arbeit | Masse des Ritzels | | | Masse des Rades | | | Masse Ritzel u. Rad | |
|---|---|---|---|---|---|---|---|---|---|
| KS | A | nach KS | Änderung mRi [mg] | | nach KS | Änderung mRa [mg] | | Änderung mRi+Ra [mg] | |
| | [kWh] | mRi [g] | Δ | Σ | mRa [g] | Δ | Σ | Δ | Σ |
| Neu | 0,19 | 730,021 | - | - | 1260,370 | - | - | - | - |
| 4 | 6,43 | 730,021 | 0 | 0 | 1260,370 | 0 | 0 | 0 | 0 |
| 5 | 11,80 | 730,021 | 0 | 0 | 1260,370 | 0 | 0 | 0 | 0 |
| 6 | 19,50 | 730,021 | 0 | 0 | 1260,370 | 0 | 0 | 0 | 0 |
| 7 | 29,90 | 730,021 | 0 | 0 | 1260,370 | 0 | 0 | 0 | 0 |
| 8 | 43,50 | 730,021 | 0 | 0 | 1260,370 | 0 | 0 | 0 | 0 |
| 9 | 60,80 | 730,021 | 0 | 0 | 1260,370 | 0 | 0 | 0 | 0 |
| 10 | 82,00 | 730,021 | 0 | 0 | 1260,370 | 0 | 0 | 0 | 0 |
| 11 | 107,70 | 730,021 | 0 | 0 | 1260,370 | 0 | 0 | 0 | 0 |
| 12 | 138,10 | 730,021 | 3 | 3 | 1260,370 | 3 | 3 | 6 | 6 |

Aus den in Tabelle 1 gezeigten Ergebnissen wird ersichtlich, dass der Verschleiß bzw. die Abnutzung bei Kombination der Werte von Ritzel und Rad bei 6 mg nach Kraftstufe 12 liegt.

Um die Vorteile im Hinblick auf den geringen Verschleiß bzw. die geringere Abnutzung zu zeigen, wurde der FZG-Test mit einer herkömmlichen Schmierstoffzusammensetzung durchgeführt. Der Schmierstoff enthielt ein Mineralöl und Poly-iso-butylen und wies eine Viskosität von 10.000 cSt bei 40 °C auf. Die oben genannten Parameter sind auch Grundlage für diesen FZG-Test.

Die Ergebnisse sind Tabelle 2 gezeigt.

**Tabelle 2**

| Kraftstufe | Arbeit | Masse des Ritzels | | | Masse des Rades | | | Masse Ritzel u. Rad | |
|---|---|---|---|---|---|---|---|---|---|
| KS | A | nach KS | Änderung mRi [mg] | | nach KS | Änderung mRa [mg] | | Änderung mRi+Ra [mg] | |
| | [kWh] | mRi [g] | Δ | Σ | mRa [g] | Δ | Σ | Δ | Σ |
| Neu | 0,19 | 728,362 | - | - | 1267,747 | - | - | - | - |
| 4 | 6,43 | 728,362 | 0 | 0 | 1267,747 | 0 | 0 | 0 | 0 |
| 5 | 11,80 | 728,362 | 0 | 0 | 1267,747 | 0 | 0 | 0 | 0 |
| 6 | 19,50 | 728,362 | 0 | 0 | 1267,747 | 0 | 0 | 0 | 0 |
| 7 | 29,90 | 728,362 | 0 | 0 | 1267,747 | 0 | 0 | 0 | 0 |
| 8 | 43,50 | 728,362 | 0 | 0 | 1267,747 | 0 | 0 | 0 | 0 |
| 9 | 60,80 | 728,362 | 0 | 0 | 1267,747 | 0 | 0 | 0 | 0 |
| 10 | 82,00 | 728,362 | 0 | 0 | 1267,747 | 0 | 0 | 0 | 0 |
| 11 | 107,70 | 728,362 | 0 | 0 | 1267,747 | 0 | 0 | 0 | 0 |
| 12 | 138,10 | 728,362 | 17 | 17 | 1267,747 | 14 | 14 | 31 | 31 |

Im Gegensatz zu der erfindungsgemäßen Schmierstoffzusammensetzung lag der Verschleiß- bzw. Reibungsverlust bei 31 mg bei Kraftstufe 12.

Wie bereits erwähnt werden die offenen Zahnradgetriebevorrichtungen hauptsächlich mittels Sprühvorrichtungen geschmiert. Daher muss der Schmierstoff eine ausgezeichnete Sprühfähigkeit aufweisen. Die ausgezeichnete Sprühfähigkeit der oben genannten Schmierstoffzusammensetzung wurde bei verschiedenen Temperaturen und Pumpdrucken durchgeführt. Tabelle 3 zeigt die Ergebnisse.

**Tabelle 3**

| Sprayart | Temperatur (°C) | Pumpendruck (bar) | Spraymuster* |
|---|---|---|---|
| feststehend | 10 | 3 | - |
| feststehend | 10 | 5 | - |
| feststehend | 10 | 7 | OK |
| feststehend | 25 | 3 | - |
| feststehend | 25 | 5 | nicht zu bestimmen |
| feststehend | 25 | 7 | gut |
| feststehend | 40 | 3 | nicht zu bestimmen |
| feststehend | 40 | 5 | gut |
| feststehend | 40 | 7 | gut |

| | | | |
|---|---|---|---|
| * Die Bestimmung des Spraymusters erfolgte visuell. | | | |

Es konnte also gezeigt werden, dass die erfindungsgemäße Schmierstoffzusammensetzung eine gute Sprühfähigkeit aufweist.

Die Schmierstoffzusammensetzung wird in offenen Zahnradgetrieben für Drehrohröfen und Mühlen, bei der Gewinnung von Mineralien und Erzen, bei der Herstellung von Düngemitteln, der Abfallbearbeitung, der Zementherstellung oder bei der Papierherstellung verwendet.

## Patentansprüche

1. Verwendung eines Schmierstoffes enthaltend
90 bis 99 Gew.-% hochviskoses, wasserlösliches Polyalkylen-oxidcopolymer ausgewählt aus der Gruppe bestehend aus Polyethylenoxid/Polypropylenoxid im Verhältnis 1:1, das eine Viskosität von 5 bis 1500 cSt bei 40°C und ein Molekulargewicht von 90 bis 4.000 aufweist und
Polyethylenoxid/Polypropylenoxid im Verhältnis das eine Viskosität im Bereich von 90 bis 54.000 cSt bei 40°C und ein Molekulargewicht im Bereich von 980 bis 20.000, vorzugsweise von 1.000 bis 18.000 cSt bei 40°C und ein Molekulargewicht im Bereich von 980 bis 20.000 aufweist, und
10 bis 1 Gew.-% Additive in offenen Zahnradgetrieben für Drehrohröfen und Mühlen, bei der Gewinnung von Mineralien und Erzen, bei der Herstellung von Düngemitteln, der Abfallbearbeitung, der Zementherstellung und bei der Papierherstellung.

2. Verwendung nach Anspruch 1, wobei die im Schmierstoff vorhandenen Additive ausgewählt werden aus der Gruppe bestehend aus Antioxidationsmittel, Korrosionsschutzmittel, Verschleißschutzmittel, Pourpoint- und Viskositätsverbesserer, UV-Stabilisatoren.

3. Verwendung nach einem der vorherigen Ansprüche, wobei die Additive ausgewählt werden aus der Gruppe bestehend aus Bornitrid, Verbindungen auf Basis von Phosphaten, Carbonaten, Carboxylaten, sowie Alkali- und Erdalkalisalze von Mono- und Dicarbonsäuren.

4. Verwendung nach einem der Ansprüche 1 bis 3, wobei der Schmierstoff noch weitere Grundöle ausgewählt aus der Gruppe bestehend aus Estern, Mineralöle, synthetische Kohlenwasserstoffe, wasserunlösliche Polyglykole enthält.

5. Verwendung nach einem der vorhergehenden Ansprüche, wobei der Schmierstoff
98,7 Gew.-% Polyethylenglykol/Polypropylenglykol im Verhältnis 3:1 mit einer Viskosität von 17.850 cSt bei 40°C und einem Molekulargewicht von 15.000 sowie einem Pourpoint von 4°C,
1 Gew.-% phenolisches Antioxidationsmittel und
0,3 Gew.-% Bernsteinsäurehalbester als Korrosionsschutzmittel enthält.

## Claims

1. A use of a lubricant, containing
90 to 99 wt.-% of a high-viscosity, water-soluble polyalkylene oxide copolymer selected from the group consisting of
polyethylene oxide/polypropylene oxide in a ratio of 1:1 having a viscosity of 5 to 1500 cSt at 40°C and a molecular weight of 90 to 4000, and
polyethylene oxide/polypropylene oxide in a ratio of 3:1 having a viscosity in the range from 90 to 54,000 cSt at 40°C and a molecular weight in the range from 980 to 20,000, preferably 1000 to 18,000 cSt at 40°C and a molecular weight in the range from 980 to 20,000, and
10% to 1 wt.-% of one or more additives in open gear transmission systems for rotary furnaces and mills used to obtain minerals and ores, in the production of fertilisers, in waste processing, in cement production and in papermaking.

2. The use according to claim 1, wherein the additives present in the lubricant are selected from the group consisting of antioxidants, anticorrosives, antiwear agents, pour point improvers, viscosity improvers, and UV stabilisers.

3. The use according to one of the preceding claims, wherein the additives are selected from the group consisting of boron nitride, compounds based on phosphates, carbonates, carboxylates, and alkali metal and alkaline earth metal salts of mono- and dicarboxylic acids.

4. The use according to one of claims 1 to 3, wherein the lubricant comprises further base oils selected from the group consisting of esters, mineral oils, synthetic hydrocarbons and water-insoluble polyglycols.

5. The use according to one of the preceding claims, wherein the lubricant contains
98.7 wt.-% of polyethylene glycol/polypropylene glycol in a ratio of 3:1 having a viscosity of 17,850 cSt at 40°C and
a molecular weight of 15,000 and a pour point of 4°C, 1 wt.-% of phenolic antioxidant, and
0.3 wt.-% of succinic monoester as anticorrosive.

## Revendications

1. Utilisation d'un lubrifiant contenant
90 à 99% en poids d'un copolymère d'oxyde de polyalkylène sélectionné parmi le groupe constitué
d'oxyde de polyéthylène/d'oxyde de polypropylène dans un rapport de 1 :1, présentant une viscosité de 5 à 1500 cSt à 4°C et un poids moléculaire de 90 à 4.000, et
d'oxyde de polyéthylène/d'oxyde de polypropylène dans un rapport de 3 :1, présentant une viscosité dans la plage de 90 à 54.000 cSt à 40°C et un poids moléculaire dans la plage de 980 à 20.000, de préférence de 1.000 à 18.000 cSt à 40°C et un poids moléculaire dans la plage de 980 à 20.000 et
10 à 1 % en poids d'additifs dans des engrenages découverts pour four rotatifs et moulins, pour l'extraction de minéraux et de minerais, pour la fabrication d'engrais, le traitement des déchets, la fabrication de ciment et la fabrication de papier.

2. Utilisation suivant la revendication 1, pour laquelle les additifs existant dans le lubrifiant sont sélectionnés parmi le groupe constitué par des antioxydants, des agents anti-corrosion, des agents anti-usure, des agents d'amélioration du point d'écoulement et de la viscosité, des stabilisateurs UV.

3. Utilisation suivant une des revendications précédentes, pour laquelle les additifs sont sélectionnés parmi le groupe constitué de nitrure de bore, de composés à base de phosphates, de carbonates, de carboxylates, ainsi que de sels alcalins et alcalino-terreux d'acides mono- et dicarboniques.

4. Utilisation suivant une des revendications 1 à 3 précédentes, pour laquelle le lubrifiant contient encore d'autres huiles de base sélectionnées parmi le groupe constitué par des esters, des huiles minérales, des hydrocarbures synthétiques, des polyglycols insolubles dans l'eau.

5. Utilisation suivant une des revendications précédentes, pour laquelle le lubrifiant contient
98,7 % en poids de polyéthylène glycol/polypropylène-glycol dans un rapport de 3 :1 avec une viscosité de 17.750 cSt à 40°C et un poids moléculaire de 15.000 ainsi qu'un point d'écoulement de 4°C,
1 % en poids d'antioxydant phénolique et
0,3% en poids de semi-ester de l'acide succinique comme agent anti-corrosion.
